# EUROPEAN PATENT APPLICATION

(11) **EP 4 810 958 A1**
(43) Date of publication of application: **23.09.2026**
(21) Application number: 25164079.3
(22) Date of filing: 17.03.2025
(51) Int. Cl.: G01N 35/00

(54) **LABORATORY SYSTEM**

(71) Applicant: Sciquoia AG, 4052 Basel (CH)
(72) Inventor: DITTRICH, Christian, 4052 Basel (CH); MAUCH, Stefan, 4052 Basel (CH)
(74) Representative: Vossius & Partner Patentanwälte Rechtsanwälte mbB

(57) **Abstract**

A laboratory system for preparing a plurality of samples in accordance with one or more sample preparation methods, the system comprising a database unit with a database, the database storing information for defining a plurality of method parameters, the database unit being configured to define the method parameters in accordance with a selected sample preparation method, and a laboratory apparatus comprising at least one materials zone, a data communication interface, and a control unit.

## Description

The present invention relates to a laboratory system and method for handling materials, e.g. for preparing a plurality of samples, in accordance with one or more sample preparation methods. More specifically, the present invention relates to a system comprising a database unit and a laboratory apparatus, the laboratory apparatus having a control unit with a controller software comprising instructions for performing a plurality of basic functionalities. The controller software may be configured to perform, within a selected sample preparation method, a plurality of loops with the basic functionalities being performed in a predefined order within each of the plurality of loops. Preferably, the system may be a liquid handling system. In this case, the laboratory apparatus may be a liquid handling apparatus.

In the field of laboratory systems, in particular liquid handling systems for sample preparation, it is common to employ automated apparatuses to enhance precision, efficiency, and reproducibility in laboratory workflows. Known liquid handling apparatuses, i.e. liquid handlers, typically comprise a combination of hardware and software components designed to handle various liquids - including reagents, solvents, and samples - in a controlled, precise and highly reliable manner. Liquid handlers in general include a work bed having one or more material zones to accommodate one or more samples and or labware components. The apparatus may comprise one or more robotic arms carrying pipetting devices such that at least some of the pipetting devices are movable over the work bed. A software is configured to control the robotic arms and/or pipetting activities to execute predefined protocols, i.e., methods for preparing samples at the work bed. These predefined protocols usually are individually programmed and validated under high effort for a specific setup of the apparatus. Therefore, setup is expensive. Furthermore, within one setup, flexibility is hardly given.

Known apparatuses also need to be carefully equipped by trained operators since the reliability of the methods performed on the apparatuses depend on the correct equipment of the work bed with needed labware and samples at specific positions within the work bed.

Although known apparatuses may bring some advancements due to automation, existing liquid handlers face several challenges that limit their effectiveness and flexibility. One significant issue with current liquid handling systems is the rigidity of their programming and operational protocols. Many systems require manual input and configuration for each new sample preparation method, which can be time-consuming and prone to human error. Furthermore, especially when used under good manufacturing practice (GMP), expensive, extensive, and time-consuming qualification in accordance with Good Automated Manufacturing Practice (GAMP) 5 Category 5 of the programming is necessary, which - due to their programming rigidity - needs to be done on the exact liquid handler setup as desired for a specific use scenario. So, there is high effort to bring the system into routine use.

Another challenge in this context is the limited adaptability of existing systems to handle different materials and sample types. Known systems may not be able to process different materials based on their specific requirements, leading to inefficiencies and potential contamination. Furthermore, many known systems rely on the presence and correct placement of all necessary materials before initiating a sample preparation method, and the absence of a material or its erroneous placement may result in incomplete or erroneous processing. This is particularly problematic in high-throughput environments where the accuracy and reliability of sample preparation are critical.

WO 2018/140475 A1 discloses an automated system that dynamically generates robotic commands based on a retrieved map template. While this may improve flexibility, this improvement may only be given within the scope the system is set-up for. For this set-up, extensive validation under high effort is required, at least when using the system in a laboratory. As a result, the system can only be used to this exact extent of the set-up. Changing the set-up is nearly impossible or - at least - requires much time and effort, thereby leading to low flexibility outside of the scope of initial set-up. Moreover, due to desired complex validation, the system is unsuitable for environments having specific validation requirements as, e.g., GAMP 5 category 5 when used under GMP, and demanding for quick conversion of the used systems and methods.

US 2015/100155 A1 discloses a method of creating a protocol. In the disclosed method, an interface window is presented on a display. A first indicator that identifies a sample and a second indicator that indicates selection of an analysis method are received from the interface window. The analysis method defines processing to be performed on the identified sample by a liquid handler. A bed layout that defines locations of a plurality of labware components and a type of labware component at each location on a work bed of the liquid handler is determined based on the first indicator and the second indicator. The sample is associated with a location of the locations. The determined bed layout is presented on the display. A protocol for execution by a controller of the liquid handler is created. The protocol comprises a second plurality of instructions configured to cause the liquid handler to perform the analysis on the identified sample. However, the method disclosed by US 2015/100155 A1 requires choosing the analysis method by a user. It is necessary to assign fixed positions for labware and samples in order to perform the chosen analysis method, which is programmed depending on these fixed positions. Therefore, at least efficiency and/or flexibility of the disclosed method is limited and the process further may be prone to operator errors.

In view of the above, there remains a need for laboratory systems that offer greater flexibility, accuracy, and/or efficiency. Specifically, there is a need for systems that improve the state of the art at least in one of the following: seamless integration of various components, reducing extensive customization, minimizing risk of failure, minimizing effort for validation.

It is therefore an object of the present invention to provide a laboratory system that at least partially satisfies the remaining needs and/or at least partially overcomes the disadvantages of known systems.

According to the present invention, this object is achieved by a laboratory system for handling materials in accordance with one or more methods, preferably a liquid handling system for preparing a plurality of samples in accordance with one or more sample preparation methods. The system comprises: a database unit with a database, and a laboratory apparatus, preferably a liquid handling apparatus.

While the present invention in general relates to laboratory systems for handling materials in accordance with one or more methods, a preferred laboratory system of the invention is a liquid handling system and the invention is therefore described, at least to some extent, based on such liquid handling system. However, as it will be apparent for the skilled reader, the invention is applicable to different kinds of laboratory systems including laboratory apparatuses, e.g., solid handling systems (for dispensing solids), systems combining solid and liquid handling, systems for producing eluents (in this case, a pump may be required instead of pipettes), etc. In other words, the invention may be implemented in laboratory systems including an apparatus configured for process automation. The invention may be particularly advantageous for systems including complex laboratory apparatuses and/or for systems being designed for complex, lengthy processes having more than two, preferably more than three parameters that change (e.g., two or more of: a substance, a volume, a temperature, labware, material locations, and/or different manners in which samples are provided).

According to the invention, the database preferably stores information for defining a plurality of method parameters, and the database unit is configured to define the method parameters in accordance with a selected sample preparation method.

The selected sample preparation method may be a method selected by a user of the system, e.g. via a user interface of the laboratory apparatus or a separate device (such as a computer, smartphone, or tablet). Alternatively or additionally, the selected sample preparation method may be a method selected by the laboratory system based on an identification of materials to be processed that are provided in the materials zone. In particular, the system (e.g., the database unit) may have a memory wherein a plurality of sample preparation methods to be selected are saved.

The laboratory apparatus, e.g. the liquid handling apparatus, preferably comprises at least one materials zone being configured for receiving a plurality of materials to be processed in the laboratory apparatus. The laboratory apparatus preferably further comprises a data communication interface configured for communicating with the database unit.

The laboratory apparatus preferably further comprises a control unit, wherein the control unit has a memory. The memory stores a controller software configured for having the apparatus perform a plurality of basic functionalities. The controller software comprises an instruction set for each basic functionality, each instruction set comprising one or more configurable variables, preferably a set of configurable variables.

The controller software is configured to perform, within a selected sample preparation method, a plurality of loops. In each of the loops, the instruction sets are executed, preferably in a predefined order. In other words, a plurality of instructions sets are executed, with each of the instruction sets corresponding to a respective basic functionality. Within each loop, the plurality of instruction sets is executed, preferably in a predefined order. Preferably, the same plurality of instruction sets is executed within each loop. More preferably, the same instruction sets are executed in same predefined order within each of the loops. It will be appreciated that executing a respective instruction set may not necessarily comprise executing the corresponding basic functionality of this instruction set. It may depend on the selected sample preparation method whether a specific basic functionality associated with a specific instruction set of the plurality of instructions sets is required to be executed in the current loop. Therefore, executing the instruction sets in each loop may comprise determining whether the instruction set is to be executed or not. In one alternative, this can be achieved by determining, preferably by using a condition query, whether one or more specific instruction sets (comprising the required one or more basic functionalities) are to be executed in this specific loop. Only these instruction sets comprising the required one or more basic functionalities are executed, the others are ignored. Additionally or alternatively, executing the instruction sets in each loop may comprise populating all configurable variables of all instruction sets. In this case, configurable variables associated with a basic functionality that is not required in a specific loop may be assigned by a value that prevents their execution (e.g. the numeric value "0").

The control unit is configured to retrieve, from the database unit, and preferably through the data communication interface, a respective method parameter for each configurable variable of the sets of configurable variables, and to execute the plurality of loops with the configurable variables defined in accordance with the retrieved method parameters. The method parameters may be retrieved from the database unit by the controller before executing the plurality of loops, or in a stepwise fashion (e.g., after executing one or more of the loops method parameters for defining the configurable variables for one or more subsequent loops may be retrieved).

In other words, each time an instruction set for a respective basic functionality is executed, the manner in which the basic functionality is carried out by the apparatus (or whether it is carried out at all) is determined by the method parameters provided from the database for the respective configurable variables of the instruction set. In the context of the present invention, determining the configurable variables for one or more of the instruction sets in the controller software may also be referred to as "populating" or "parametrizing" the respective instruction sets.

The laboratory system preferably is configured such that a standardized hardware can be used for different sample preparation methods. Information defining different sample preparation methods is stored in the database, which preferably is external to the liquid handling apparatus having the standardized hardware.

The laboratory apparatus may comprise - in a standard configuration - at least the control unit and the data communication interface. The control unit may be configured to control a robotic arm and/or material collection and dispensing operations. Preferably, where the laboratory apparatus is a liquid handling apparatus, the control unit is configured to control a robotic arm and/or fluid extraction and fluid dispensing (e.g., pipetting or pumping) operations of the liquid handling apparatus.

As noted above, the controller software comprises instruction sets for performing a plurality of basic functionalities. Each of these instruction sets may also be referred to as a "basic building block" herein. The controller software may be configured for repeatedly executing a loop comprising a plurality of these building blocks, wherein the building blocks are executed in the same sequence within each of the loops.

The controller software may be configured to execute the plurality of loops consecutively for performing the selected sample preparation method (e.g. at least two, at least five, at least ten, or at least fifty loops consecutively). The number of loops to be executed, as well as the set of variables determining how each of the basic functionalities in each of the plurality of loops is to be executed, may be retrieved from the information stored in the database. By populating the instruction sets with different values for the configurable variables in the different loops, the selected sample preparation method may be carried out as defined in the database.

The skilled person will thus appreciate that the controller software is not required to comprise an individual, specifically defined set of instructions for each sample preparation method, such as an individual set of instructions including all information required to perform a respective sample preparation method (e.g., position(s) of materials, volumes of liquids to be pipetted, number and order of different positions to be moved to). In other words, the controller software is not required to contain an individual set of instructions for each of a plurality of sample preparation methods. It may be sufficient for the controller to contain the instruction sets for performing the basic functionalities.

The basic functionalities may be basic operations that the laboratory apparatus is required to perform in order to be able to carry out a sample preparation method.

In their simplest form, a first basic functionality may be a command to move an actuator (e.g., a robotic arm) along at least one first axis (e.g., up and down), a second basic functionality may be a command to move the actuator along at least one second axis (e.g., right and left) that is perpendicular to the first axis, and/or a third basic functionality may be a command to move the actuator along at least one third axis (e.g., front and back) that is perpendicular to the first and second axis. In the context of a liquid handling apparatus, a further basic functionality may be, e.g., to extract a fluid (e.g., suction fluid into a pipette) and another basic functionality may be, e.g., to delivering a fluid (e.g., expel fluid from a pipette).

Preferably, the basic functionalities comprise combinations of such commands. This is, each basic functionality may be a processing step. Such processing steps may be, e.g., picking up a pipette tip at a determined location, picking up liquid from a first container, dispensing liquid into a second container, releasing the pipette tip, opening/closing a container, or labelling a container. A tip and/or a container in the context of the present invention may be considered to form a material to be processed, as defined in further detail hereinbelow.

In other words, the term "basic functionality" may refer to a certain step (which may involve one or more individual software instructions or commands) that is (usually repeatedly) executed as part of the one or more sample preparation methods. Stated differently, preferably, the one or more sample preparation methods each can be broken down into individual basic functionalities, wherein each of these basic functionalities is repeated within a respective sample preparation method.

Populating the set of configurable variables of each instruction set with respective method parameters (e.g., numerical values) retrieved form the database, may quantify, e.g., the movement of a movable component or the volume of a pipetting process.

The database may be designed to communicate with the laboratory apparatus' (e.g., the liquid handling apparatus') data communication interface. In this manner, the configurable variables of each basic functionality to be carried out by the controller software may be populated through the interface with a respective method parameter. Preferably, this allows the standardized hardware and controller software to carry out a desired (e.g., customized) method. The method parameters may be stored in the database and thus independently of the apparatus. In other words, one or more sample preparation methods may be defined by the method parameters in the database. When the apparatus performs a respective method, preferably, the controller software executes only loops with a sequence of instruction sets with the one or more variables in each instruction set of each loop being defined as specified in the database.

In view of the above, it may be possible to validate the standardized controller software of the apparatus and, independently of this validation of the apparatus and/or controller software, to validate the database comprising the method parameters. Qualification of each individual apparatus may thus be greatly simplified. Moreover, flexibility of the apparatus may be increased because the apparatus comprising the standardized controller software may be used for a wide variety of different sample preparation methods without having to change and/or re-validate the apparatus and/or its controller software. Also, changes in existing sample preparation methods may be easier to implement, i.e. without having to change and/or re-validate the apparatus and/or its controller software. Rather than having to validate the controller software of each laboratory apparatus for each sample preparation method, it is possible to validate the unit method of the controller software, i.e. a shell having the configurable variables. This validated unit method may subsequently be relied on for performing desired sample preparation methods via the database.

Describing the above in different words, the laboratory apparatus (e.g., the liquid handling apparatus) having the controller software, is configured to execute, within a selected sample preparation method, a plurality of loops with the instructions sets for respective basic functionalities being executed in each loop, preferably in a predefined order. The plurality of loops as a whole may also be referred to as performing a "unit method" herein. In order to perform the selected sample preparation method, the apparatus receives as input the method parameters defining all variables of the basic functionalities to be performed for said selected sample preparation method.

The method parameters stored in the database may be associated with a method unique identifier (M-UID), each M-UID corresponding to a respective one of the one or more sample preparation methods.

One or more samples to be processed in the laboratory apparatus may be provided with a sample unique identifier (S-UID). Each S-UID may be associated to one or more M-UID. The information, which S-UID is executed with which M-UID may be retrieved from the database unit or another system, e.g. a Laboratory Information Management System (LIMS). This may reduce operator errors and/or improve reliability.

Not storing the method parameters for performing each sample preparation method in the memory of the control unit (e.g., by hard-coding them into the controller software), but instead parametrizing the unit method based on method parameters stored in the external database, may offer key advantages. In particular, this layout may require only configuration of the "unit-method" by parametrization rather than customization of the controller software for a specific use scenario, thereby eliminating the need for code changes in the controller software when adding or altering methods. This directly effects the requirements and efforts of validation, especially when GMP is required. In this case, the supplier may validate the entire system under GAMP 5 Category 5 once. In contrast, known controller software may need to be customized for specific clients and/or use scenarios, i.e. whenever there are changes in the code and/or the (frequently customized) hardware of the apparatus. Therefore qualification under GAMP 5 Category 5 was required for each apparatus.

With the present invention, this type of customization of an entire product has been overcome, with flexibility being maintained or even increased. This is because, with the inventive layout, it is possible to perform many different (e.g., customized) sample preparation methods by changing the parametrization only, i.e. without changing the controller software. GMP qualification of a changed parametrization may be performed under GAMP 5 category 4, which significantly reduces validation efforts and thereby accelerates implementation. In other words, the inventive layout may enable qualification of individual systems under GAMP 5 category 4 (with the type of laboratory apparatus used in the system having once been qualified under GAMP 5 category 5), rather than GAMP 5 category 5 having to be observed for each individual system.

As also found by the present inventors, use of a laboratory apparatus with standardized hardware may enable greater flexibility and efficiency in method development and execution than customized solutions. With a specifically determined hardware configuration, the controller software can depend on a consistent framework, allowing for more versatile programming and execution of complex methods, or runs involving multiple methods. This software design enables users to add/edit methods and execute workflows while maintaining compliance, and re-validation of the software may not be required.

Moreover, standardizing both hardware and basic controller software may enable the manufacturer to conduct extensive and systematic pre-qualification tests based on Quality by Design (QbD) principles. This approach allows for a high-density sampling of critical parameters - such as, e.g., liquid transfer time, evaporation, and others - across a wide experimental space. The ability to systematically vary these parameters, without changing code in the basic controller software, is helpful for specifying the performance characteristics of the system and ensuring acceptable tolerances and precision that meet stringent GMP requirements. This comprehensive capability may let prospective users judge the performance of the system across varying circumstances and may lower the risk of a purchase. As a result, the present invention may facilitate a smoother path to compliance, may reduce the validation burden for end users, and/or may ensure that the system can perform consistently and reliably under diverse conditions.

Additionally, the standardization of hardware may enable preparation of a universal set of comprehensive documentation - including Requirement Specifications, Functional Specifications, Design Specifications, Installation Qualification, and Operational Qualification - applicable for all customers. This may reduce the validation burden for end users significantly and may accelerate deployment. Furthermore, the present invention can provide a validation certificate for its standardized basic controller software, ensuring that it meets all regulatory requirements and performs reliably within the defined parameters.

These elements - robust pre-qualification data, standardized documentation, and validated controller software - may serve as key scaling factors that may provide a fast, predictable and/or, comparatively, inexpensive path to automated liquid handling for analytical sample preparation.

Preferably, when executing the plurality of loops, the configurable variables correspond to the retrieved method parameters. Preferably, when executing the plurality of loops, the same instructions sets (i.e., for performing the same basic functionalities) are executed, and the set of configurable variables in each instructions set for each basic functionality is defined in accordance with the retrieved method parameters.

The control unit may be configured to determine, based on the retrieved method parameters, whether one or more instructions sets and/or basic functionalities are not to be performed during one or more respective loops. The controller may then be configured to not perform the respective one or more basic functionalities during the one or more respective loops.

Preferably, the method parameters are configured such that in at least some of the loops only one of the basic functionalities is carried out by the laboratory apparatus. Preferably, while the controller software may execute each of the instruction sets for each of the basic functionalities in each loop, the basic functionality associated with a specific instruction set is not necessarily executed when the respective instruction set is executed or called. One way to achieve this may be using condition queries. So, one or more of the instruction sets, preferably each of the instruction sets, may comprise a condition query whether the respective basic functionality is required in this loop or not. In other words, when executing an instruction set, it may first be determined whether the respective basic functionality is required in this loop. If required, the instruction set is further executed (so, the basic functionality will be executed). If the respective basic functionality associated with this instruction set is not required in this loop, execution of this instruction set is terminated. The loop may proceed with the next instruction set. Another way to achieve this, is that the configurable variables of at least some of the instruction sets may be populated such that certain basic functionalities of a loop (i.e., basic functionalities of specific instruction sets being not required in this loop) are not carried out by the laboratory apparatus. For example, each instruction set is executed but one or more configurable variables of one or more instruction sets may be defined such that the respective associated basic functionalities are not executed (i.e., by populating the configurable variables, e.g. for defining a movement, a volume of fluid to be withdrawn and/or dispensed, with the value zero ("0")). In other words, while the controller software may execute each of the instruction sets for each of the basic functionalities in each loop, the configurable variables are configured such that only one basic functionality is carried out by the laboratory apparatus when executing said loop or loops. In principle, it may as well be possible to combine both mentioned alternatives. Independent from the alternative used, for example, a first loop may be executed such that only a first basic functionality is carried out (e.g., picking up a pipette). Subsequently, a second loop may be executed such that only a second basic functionality is carried out (which preferably is different from the first functionality; e.g., withdrawing a volume of fluid from a first container). Afterwards, a third loop may be executed such that only a third basic functionality is carried out (which preferably is different from the first and second functionality; e.g., dispensing the volume of fluid into a second container).

More preferably, a majority of the loops are executed such that only one basic functionality is carried out by the laboratory apparatus in each of the loops. Even more preferably, in each of the plurality of loops only one of the basic functionalities is carried out by the laboratory apparatus.

In this manner, regardless of the order in which the instruction sets are executed in the loops, it may be ensured that the basic functionalities are carried out by the apparatus in the sequence required for the selected sample preparation method. Moreover, the flexibility and application area of the system may be further increased. For example, the unit method may comprise basic functionalities which are necessary only for some of the plurality of sample preparation methods the system is designed for. When performing a sample preparation method which does not require all basic functionalities, certain basic functionalities may be omitted (e.g., by populating the sets of configurable variables with "0"). No modification of the controller software itself is required for this purpose.

The apparatus preferably comprises a scanner. The scanner may be an optical scanner. As will be appreciated by the skilled reader, a variety of scanners is known in the field, and any suitable scanner may be employed.

Preferably, each of the plurality of materials to be processed is associated with a respective identifier, each identifier being configured to be read by the scanner. The identifiers may be an optical code, preferably a barcode, more preferably a 1D barcode or a 2D barcode, such as a QR code. More preferably, the scanner is configured to scan the identifiers of the materials provided in the materials zone. By identifying one or more of the identifiers, the system may select the required sample preparation method. Alternatively or additionally, the system may determine whether all materials required for the selected sample preparation method have been placed in the materials zone.

One or more of the identifiers may be attached directly to the materials to be processed. Alternatively or additionally, one or more of the identifiers may be attached to an array or mount carrying a plurality of materials to be processed. This may be helpful, for example, for allowing the system to identify the materials as such as well as arrays or mounts from which materials are to be retrieved or into which materials are to be placed.

Preferably, the apparatus is configured to read the identifiers with the scanner, and to send information derived from the identifiers to the database unit. The information may be identity information configured to identify the associated materials to be processed and/or location information for identifying a respective location of the associated materials to be processed within the materials zone. In this manner, the reliability of the apparatus may be enhanced further and/or human mistakes may be reduced.

While it is known to equip some laboratory apparatuses with a scanner, the inventors have found such scanner to provide surprising benefits in the context of the present invention, where the system may use the identity and/or location information to adapt the method parameters retrieved by the control unit from the database unit.

For example, by identifying the location of the materials to be processed within the materials zone, the system may adapt the method parameters retrieved by the control unit from the database unit such that the selected sample preparation method is adequately performed for a plurality of possible locations. For example, the location information may be sent by the controller to the database, which may then adapt the method parameters retrieved by the controller accordingly. In other words, the system may populate the configurable variables depending on the location information. The user, therefore, is not required to provide each material to be processed at a predetermined location. This may allow the user to choose positions at which materials to be processed are located within the materials zone, and/or may allow the system to perform the sample preparation methods correctly even when the materials to be processed are placed at erroneous locations. User-friendliness may thus be increased.

In other words, the system can be used in accordance with a "zone" concept rather than being restricted to specific positions at which the materials to be processed must be provided in a work bed.

The system, preferably the control unit, may be configured to retrieve from the database unit an indication of required materials to be processed. Preferably, the required materials to be processed are determined in accordance with the selected sample preparation method. Preferably, the system is configured to indicate the materials to be processed to the user.

Preferably, the system is configured to determine, based on the indication of the required materials to be processed and the identity information, whether all required materials to be processed are provided in the materials zone. More preferably, the system is configured to indicate, to the user, if a required material to be processed is missing. This may reduce human errors and mistakes, thereby improving quality, reliability and costs of the output.

The materials to be processed may comprise one or more of: one or more samples, preferably one or more samples to be processed, one or more solvents, and/or one or more labware articles.

Labware articles may be any known labware article. For example, e.g. in a liquid handling apparatus, labware articles may be one or more of the following: vials, containers, troughs, and/or pipette tips.

One or more of the materials to be processed may be provided in at least one rack. The one or more of the materials to be processed may be provided in the at least one rack either directly or via at least one array or mount. The at least one array or mount preferably is adapted to be received by the rack. Providing the one or more materials to be processed in at least one rack may improve efficiency and/or handling of the one or more materials.

Preferably, the materials zone comprises one or more of the following: an inbound zone adapted for receiving samples to be prepared, a resource zone adapted for receiving different resources required for sample preparation, and/or an outbound zone adapted for receiving prepared samples.

In other words, samples to be processed may be referred to as first materials. Solvents and labware articles may be referred to as second materials. Preferably, the first materials may be provided in a respective first materials zone (the inbound zone) of the apparatus and the second materials may be provided in a respective second materials zone (the resource zone) of the apparatus. The apparatus may be configured for placing prepared samples in a third materials zone, i.e. the outbound zone. The one or more materials zones may be abstractly defined areas, preferably located within the outer contour of the apparatus. Preferably, the zones may locally be defined in areas within the apparatus which are suitable for placing the materials, e.g. first and/or second materials, there. Preferably, the one or more materials zones are defined within the work bed of the apparatus. Preferably, the zones can be defined on or above flat surfaces or racks for carrying the materials. These flat surfaces or racks may be located at the work bed.

The apparatus preferably comprises a balance. The balance may be adapted for determining the weight of a pipetted liquid. The balance may be permanently installed on the apparatus, and may thus also be referred to as an "on-deck balance".

The balance may be employed by the system for calibration and/or performing a self-check of one or more basic functionalities.

The quantitative verification of pipet performance by weight measurement may exclude pipetting to be the root cause of a deviation. While it is known to those skilled in the art to use a balance for checking a system's ability to pipette correctly, such as in the context of known "System Suitability Test" (SST), the inventors have found that there is a risk of inaccuracies upon repeated pipetting even after relatively short usage times, in particular when one of the pipettes is more frequently used. By having the balance permanently installed on the apparatus, the pipetting volumes may be regularly checked, such as preferably each time before a GMP relevant sample preparation method is performed.

Alternatively or additionally, one or more system suitability test (SST) methods may be stored in the database as one or more of the sample preparation methods. This is, a certain SST method may be performed by the controller retrieving corresponding method parameters and populating the sets of configurable variables in accordance with the present invention. The invention thus allows an apparatus with standardized hardware and software to perform different SST methods in accordance with the general principles of the invention as disclosed herein.

As stated above, the laboratory apparatus preferably is a liquid handling apparatus. The liquid handling apparatus may be an automated air displacement liquid handling apparatus. For example, the liquid handling apparatus may be one of the following: HAMILTON Microlab NIMBUS or HAMILTON Microlab STAR, produced by Hamilton Company, 4970 Energy Way, Reno, NV 89502, USA; Fluent or Freedom EVO produced by Tecan Group Ltd., Seestrasse 103, 8708 Männedorf, Switzerland; Biomek i5 or Biomek i7, produced by Beckman Coulter Inc., 250 South Kraemer Boulevard, Brea, California 92821-6232, USA. The database, preferably the database unit, may be external to and/or remote from the liquid handling apparatus.

The data communication interface may be one or more of: a radio interface, a Wifi-interface, a LAN-interface, a 5G-interface, and/or a USB-interface.

In other words, the present disclosure may be described by the following aspects:
1. A laboratory system for preparing a plurality of samples in accordance with one or more sample preparation methods, the system comprising:
   a database unit with a database, the database storing information for defining a plurality of method parameters, the database unit being configured to define the method parameters in accordance with a selected sample preparation method, and
   a laboratory apparatus comprising at least one materials zone, a data communication interface, and a control unit, wherein
   the materials zone is configured for receiving a plurality of materials to be processed in the laboratory apparatus,
   the control unit has a memory, the memory storing a controller software, the controller software being configured for having the apparatus perform a plurality of basic functionalities, wherein the controller software comprises an instructions set for each basic functionality, each instruction set comprising a set of configurable variables, wherein the controller software is configured to execute, within a selected sample preparation method, a plurality of loops with the instruction sets being executed within each of the plurality of loops, preferably in a predefined order;
   the data communication interface is configured for communicating with the database unit; and wherein
   the control unit is configured to:
      retrieve, from the database unit and through the data communication interface, a respective method parameter for each configurable variable of each instruction set;
      execute the plurality of loops with the sets of configurable variables defined based on the retrieved method parameters.
2. The laboratory system according to aspect 1, wherein, when executing the plurality of loops, the configurable variables correspond to the retrieved method parameters.
3. The laboratory system according to aspect 1 or 2, wherein, when executing the plurality of loops, each loop comprises executing the instruction sets for the same basic functionalities.
4. The laboratory system according to aspect 1, 2, or 3, wherein the step of executing the plurality of loops comprises executing the instruction sets for the same basic functionalities in the same predefined order in a majority of the loops, preferably in each of the loops.
5. The laboratory system according to any one of aspects 1 to 4, wherein the method further comprises:
   based on the retrieved method parameters, determining whether one or more basic functionalities are not to be executed during one or more respective loops;
   not executing the respective one or more basic functionalities during the one or more respective loops.
6. The laboratory system according to any one of aspects 1 to 5, wherein the apparatus further comprises a scanner, wherein each of the plurality of materials to be processed is associated with a respective identifier, each identifier being configured to be read by the scanner, wherein the apparatus is configured to:
   reading the identifiers with the scanner,
   sending, to the database unit:
      identity information derived from the identifiers, the identity information being configured to identify the associated materials to be processed; and/or
      location information for identifying a respective location of the associated materials to be processed within the materials zone.
7. The laboratory system according to aspect 6, wherein the scanner is an optical scanner.
8. The laboratory system according to aspect 6 or 7, wherein the identifiers are an optical code, preferably a barcode, more preferably a 1D barcode or a 2D barcode, such as a QR code.
9. The laboratory system according to aspect 6, 7, or 8, wherein the scanner is configured to scan the identifiers of the materials provided in the materials zone.
10. The laboratory system according to any one of aspects 6 to 9, wherein the retrieved method parameters are defined by the database unit based on the identity information and/or the position information.
11. The laboratory system according to any one of aspects 6 to 10, wherein the system, preferably the control unit, is configured to:
   retrieve, from the database unit an indication of required materials to be processed, the required materials to be processed being determined in accordance with the selected sample preparation method, and
   indicate the materials to be processed to a user.
12. The laboratory system according to aspect 11, wherein the system is configured to determine, based on the indication of the required materials to be processed and the identity information, whether all required materials to be processed are provided in the materials zone.
13. The laboratory system according to aspect 12, wherein the system is configured to indicate, to the user, if a required material to be processed is missing.
14. The laboratory system according to any of the preceding aspects, wherein the materials to be processed comprise one or more of: one or more samples to be processed, one or more solvents, and/or one or more labware articles (such as one or more vials, one or more troughs, and/or one or more pipet tips).
15. The laboratory system according to any of the preceding aspects,
   wherein one or more of the identifiers are attached directly to the materials to be processed; and/or
   wherein one or more of the identifiers are attached to an array or mount carrying a plurality of materials to be processed.
16. The laboratory system according to any of the preceding aspects, wherein one or more of the materials to be processed are provided in at least one rack, either directly or via at least one array or mount which is adapted to be received by the rack.
17. The laboratory system according to any of the preceding aspects, wherein the materials zone comprises one or more of the following: an inbound zone adapted for receiving samples to be prepared, a resource zone adapted for receiving different resources required for sample preparation, an outbound zone adapted for receiving prepared samples.
18. The laboratory system according to any of the preceding aspects, wherein the laboratory apparatus is a liquid handling apparatus, and preferably wherein the liquid handling apparatus is an automated air displacement liquid handling apparatus.
19. The laboratory system according to any of the preceding aspects, wherein the database, preferably the database unit, is external to and/or remote from the laboratory apparatus.
20. The laboratory system according to any of the preceding aspects, wherein the data communication interface is one or more of: a radio interface, a Wifi-interface, a LAN-interface, a 5G-interface, a USB-interface.

In the following, preferred embodiments of the invention are described by way of example with reference to the following figures, which show:
- Figure 1: a diagram schematically showing a laboratory system according to an embodiment of the invention;
- Figure 2: a schematic illustration of an exemplary liquid handling apparatus to be used in the system of Fig. 1;
- Figure 3: a diagram exemplifying processing steps and data flow to be performed by a laboratory system according to the invention (such as the system of Fig. 1);
- Figure 4: a further diagram exemplifying processing steps and data flow in a system according to the invention (such as the system of Fig. 1);
- Figure 5: a further diagram exemplifying processing steps and data flow in a system according to the invention (such as the system of Fig. 1);
- Figure 6: a diagram showing steps to be performed during an exemplary use scenario of a system according to the invention (such as the system of Fig. 1);
- Figure 7: shows an exemplary implementation of a process for configuring the system by a super user; and
- Figure 8: a preferred zone concept for a laboratory apparatus to be used in a system according to the invention (such as the system of Fig. 1).

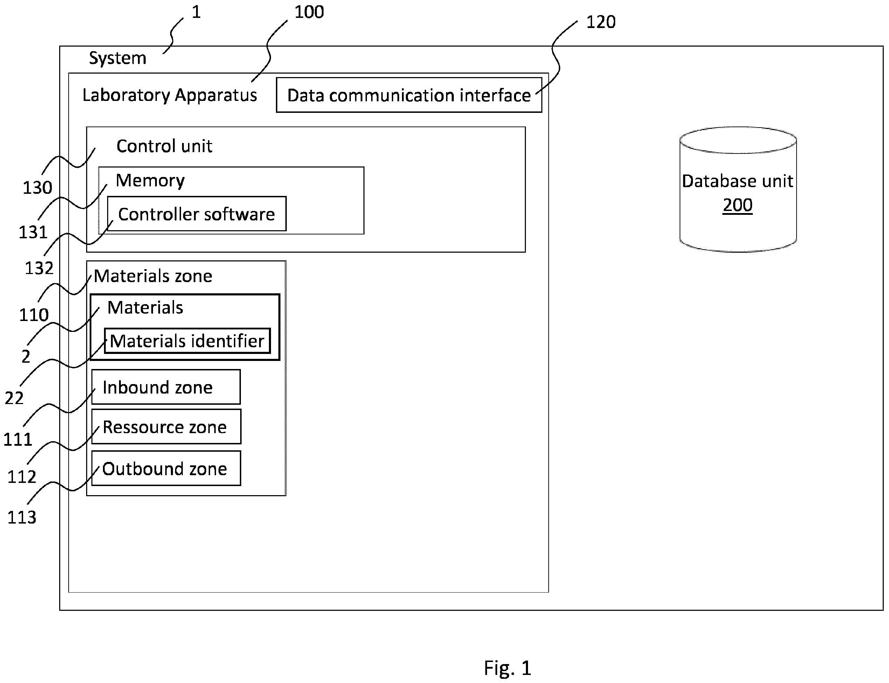

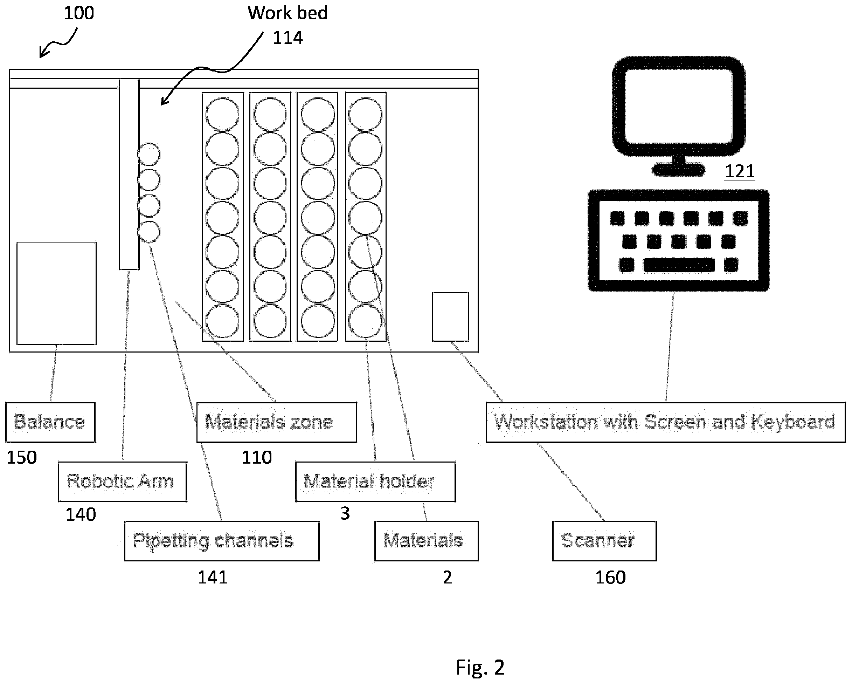

Figs. 1 and 2 show a schematic of a laboratory system 1 according to a first embodiment of the invention. In this embodiment, the laboratory system 1 is a liquid handling system. The system comprises - as a laboratory apparatus - a liquid handling apparatus 100.

The system further comprises a database unit 200. In the shown embodiment, the database unit 200 is external to the liquid handling apparatus 100.

The liquid handling apparatus 100 comprises at least one materials zone 110 and a control unit 130. The control unit 130 is equipped with a memory 131 storing a controller software 132. The liquid handling apparatus 100 further comprises a data communication interface 120 configured for allowing the controller software to communicate with the database unit 200, i.e., a software of the database unit 200.

A software for controlling the laboratory system 1 may have a software architecture comprising at least two layers. A first layer may comprise the controller software 132 for controlling the liquid handling apparatus, e.g. comprising instruction sets or basic building blocks for controlling a plurality of basic functions of the liquid handling apparatus 100. A second layer may comprise the software of the database unit 200. The first and second software layers may communicate via the data communication interface 120.

The materials zone 110 may comprise several material zones, e.g. an inbound zone 111, a resource zone 112 and an outbound zone 113. Each materials zone may be a flat surface in the range of a robotic arm, the flat surface being designed for accommodating materials, i.e., samples or labware. In other words, the materials zones may be arranged at a work bed 114 of the liquid handling apparatus 100 (see Fig. 2). In each of the material zones one or more materials 2 to be processed may be received. Each of the materials 2 may be provided with a respective identifier 22.

As further shown in Fig. 2, the laboratory apparatus, e.g. when provided as a liquid handling apparatus 100, may further comprise a robotic arm 140, a balance 150, and a scanner 160. The robotic arm 140, the balance 150, and the scanner 160 may be provided at or above the work bed 114. The balance 150 may be an on-deck balance configured to be used for, i.a., one or more System Suitability Test (SST) methods.

The data communication interface 120 may be part of a workstation 121, which may further be equipped with a screen and a keyboard to allow for operator input. The robotic arm 140 may be equipped with pipetting channels 141 and may be controlled by the controller software. The pipetting channels may be adapted for pipetting volumes of about 2 to 8 ml, preferably 1 to 10 ml. As it will be apparent for the skilled reader, in a different preferred embodiment, where the laboratory apparatus may be a solid handling apparatus, the pipetting channels 141 may be replaced by pumps, the pumps preferably having a volume of 1 to 2 liters, more preferably of 1 to 5 liters.

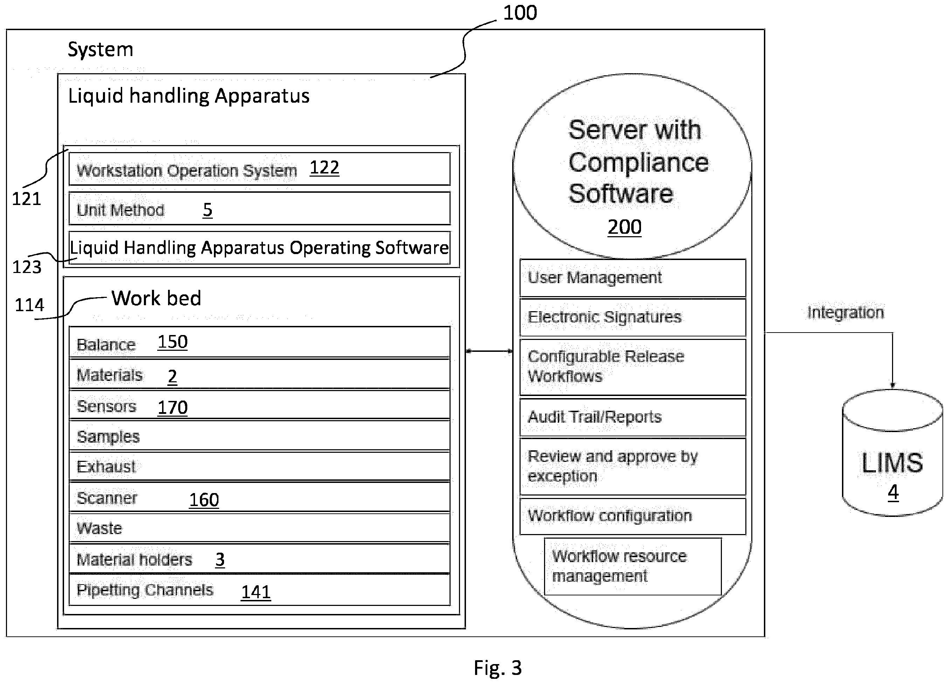

Fig. 3 shows a more detailed schematic representation of a system according to an exemplary embodiment of the present invention. The system of Fig. 3 may be the liquid handling system 1 as described with reference to Figs. 1 and 2. In Fig. 3, the system is shown in connection with a higher-ranking Laboratory Information Management System (LIMS) 4.

The system according to Fig. 3 comprises one or more automated liquid handling apparatuses (in Fig. 3, one automated liquid handling apparatus 100) in communication with a server comprising, i.a., the data base unit 200. The database unit 200 includes respective software, which may also be referred to as compliance software herein. The compliance software may provide for, for example, user management, electronic signatures, configurable release workflows, audit trail/reports, workflow configuration, and/or workflow resource management. The server may be in communication with or integrated with a higher-ranged system, e.g. the LIMS 4.

The automated liquid handling apparatus 100 comprises the workstation 121 and the work bed 114. The workstation preferably comprises the data communication interface 120 and the control unit being designed and programmed to operate the liquid handling apparatus 100. The workstation 121 thus comprises at least a workstation operating system 122, an automated liquid handling apparatus operating software 123 and the unit method 5. The work bed may comprise one or more of a balance 150, a scanner 160, material holders 3, materials 2 (i.e., waste, samples, labware, ...), pipetting channels 141, and/or sensors 170.

The database unit 200, at the server, can be individually generated and validated. The server itself may communicate with the LIMS 4, or another digitalization system containing information about the samples. The server may retrieve, from, e.g., the LIMS 4, necessary information, e.g., which sample preparation method is to be performed by the liquid handling apparatus with which samples. The database unit 200 thus may be able to send the correct method parameters to the control unit to populate the variables of the unit method therewith.

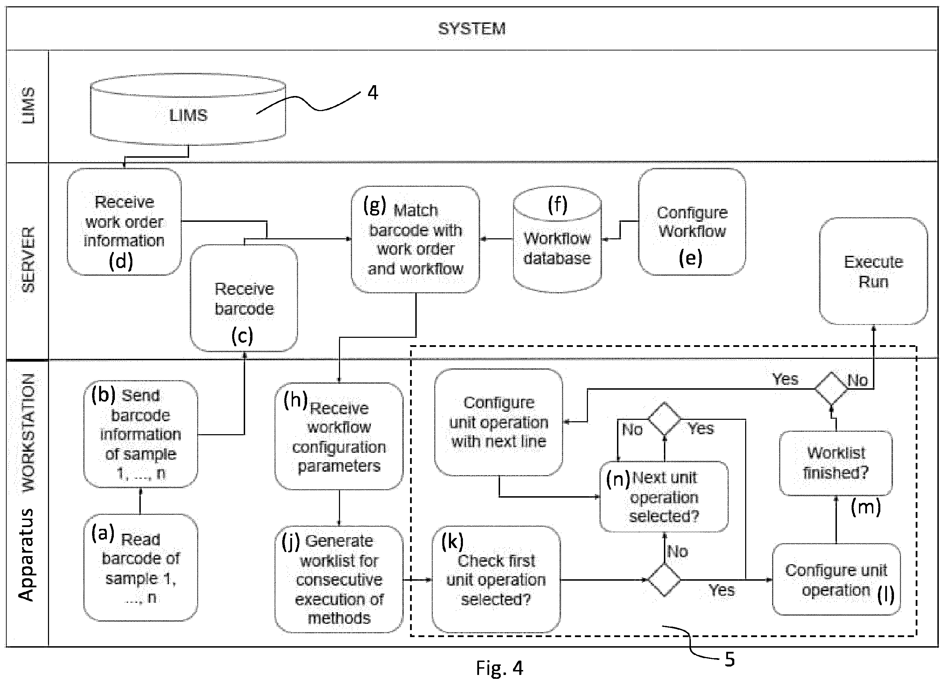

Fig. 4 shows a preferred implementation of a data flow loop in accordance with a method of the present invention. The data flow loop comprises the steps: retrieving, from the database unit 200 a respective method parameter for each configurable variable of the set of configurable variables; and executing the plurality of loops, wherein the sets of configurable variables in the basic functionalities of the loops are defined in accordance with the retrieved method parameters.

In this preferred implementation, the method includes further steps, e.g., deciding, at the server, which method parameters to send and sending specific method parameters to the data communication interface 120 of the workstation. The data flow loop in this implementation preferably is designed to work on a liquid handling system as shown in Figs. 1-3.

The data flow loop may comprise the actions of:
First, (a), reading the barcodes of samples to be prepared. The samples preferably are provided in the material's zone 110, in particular the inbound zone 111 of the liquid handling apparatus 100 (see, e.g., Fig. 2). The barcodes may be read by the scanner 160;
Second, (b), sending the gained barcode information to the server, in particular to the database unit 200.

The database unit 200 may receive, on the one hand, the respective barcode information (c). On the other hand, the database unit 200 may receive work order information (d) by a higher-ranked system, e.g., the LIMS.

At the database unit 200, one or more sample preparation methods have been configured (e). At the workflow database 210, a plurality of method parameters is stored (f), these method parameters can be defined in accordance with a selected sample preparation method. Stated differently, at the database unit 200, a specific sample preparation method can be selected and/or configured (e). This specifically selected sample preparation method is communicated to the workflow database 210. At the workflow database 210, at least some of the plurality of method parameters stored thereon are then defined, i.e., selected and/or assigned with a specific value, in accordance with the specifically selected sample preparation method (f). Preferably, the specific value is of a numeric type. So, the sample preparation methods configured in step (e) may in particular comprise information on the method parameters needed, their order in the workflow to be performed and, the value each parameter at its specific position in the order is to be assigned to.

In a further step (g), the received barcode information is matched with the work order information by the LIMS and with the selected sample preparation method. Of course, one or more of the information required in this step may additionally or alternatively received from another source, e.g., an EXCEL or CSV-file (e.g., if no connection to a LIMS and/or no barcode information is applicable). Optionally, such EXCEL or CSV file could be manually assigned. In any case, at step (g), method parameters required for the selected sample preparation method have been defined, i.e., assigned with specific values (e.g., numbers) such that this specific sample preparation method can be performed using a predefined "unit method" 5 at the liquid handling apparatus 100.

In a further step (h), the liquid handler workstation receives the sample preparation method configuration parameters. In particular, the liquid handler workstation receives a method parameter for each configurable variable, preferably through the data communication interface 120. In accordance with the received parameters, a worklist for consecutive execution within the selected sample preparation method is generated (j).

In other words, at first, the workstation preferably receives all necessary method parameters for performing the selected sample preparation method. The necessary method parameters may already be received as a worklist or the workstation may populate the worklist itself. The worklist is thus generated. Thereafter, the workstation may run through every line of the worklist and may use each line to populate the loop once, then go to the next line until the worklist is finished. The worklist is thus generated for the workflow performing one or more loops within the selected sample preparation method. Thus, in the further steps, a plurality of loops is executed. The sets of configurable variables are defined by means of the worklist such that the instruction sets for carrying out each of the basic functionalities of the loops are executed in accordance with the retrieved method parameters.

In detail, as indicated with the dashed line in Fig. 4, the workflow ("unit method 5") is looped over the plurality of basic functionalities, so-called unit operations, which may be arranged in the unit method in separate building blocks. So, in the first loop, it is checked whether the first unit operation is selected (k). This is done by checking the information retrieved from the database and transferred to the worklist. This may be done by checking, whether a set of values assigned to a parameter which is associated with the variables contained in this unit operation is zero or contains numerical values other than zero. If yes, this unit operation is configured in accordance with the retrieved parameter, i.e., the variables of this unit operation are populated accordingly (I). Next, it is checked whether the entire worklist is finished (m) and if not, the workflow is looped one more time (i.e., the unit method is configured in accordance with the next line of the worklist).

Alternatively, if the first unit operation in step (k) is not selected, the method continues to the next unit operation in this line of the workflow and checks, whether this unit operation is selected (n). This check may be performed the same way as it has been done with the first unit operation. If it is not selected, the next unit operation is checked and so on. This is repeated until the process again stops at a unit operation which is selected and the variables of this unit operation are populated as described above. This way, the workflow is looped a plurality of times until the entire worklist has been worked through, thus, until all selected unit operations in each line of the worklist have been populated with respective parameters retrieved from the database.

As a result, a specific method has been generated based on the unit method. The specific method retrieved this way is thus designed to control the liquid handling apparatus 100 in accordance with the sample preparation method which has been selected at the server. Consequently, the liquid handling system now is configured to execute a run, i.e. prepare one or more samples in accordance with the one or more selected sample preparation methods.

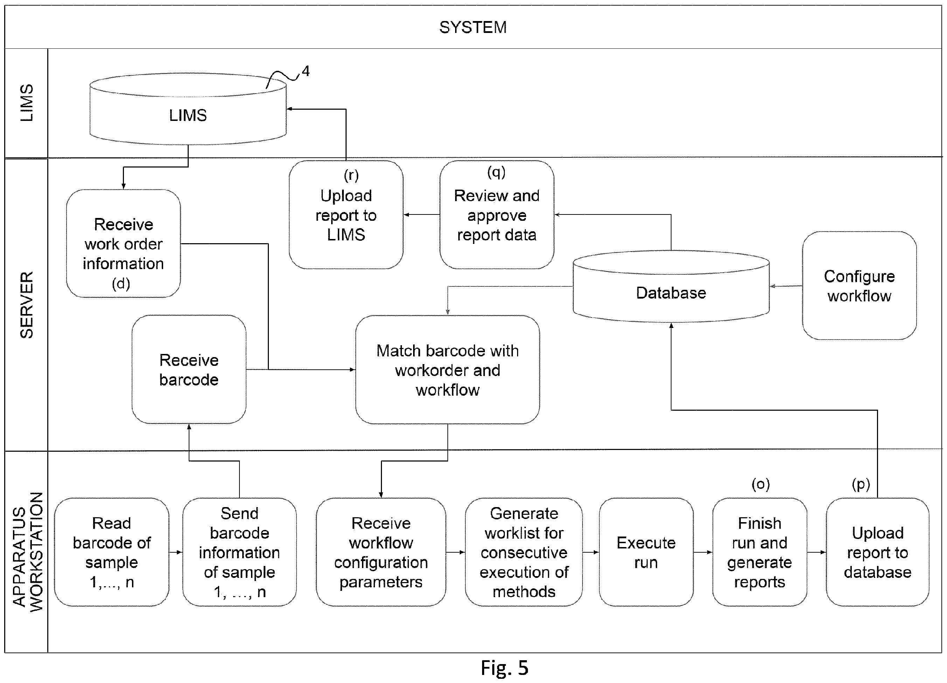

The system may be designed to report each run to the LIMS 4. Therefore, a further feedback communication line is designed as shown in Fig. 5. This feedback communication line may be implemented in addition to the functionality as described with reference to Fig. 4. After having executed the run (e.g., as described with reference to Fig. 4), a report is generated (o) (See Fig. 5). The report may be in accordance with requirements set out in pertinent regulations for liquid handling qualification, validation, and quality control. The report may be uploaded to the database 210. The database may have stored further information for quality control, allowing to review and approve the report data (q), i.e., checking whether the reported data are in accordance with the selected sample preparation method and/or within a tolerance which has been defined specifically for this selected sample preparation method. Subsequently, a report may be uploaded to the LIMS (r).

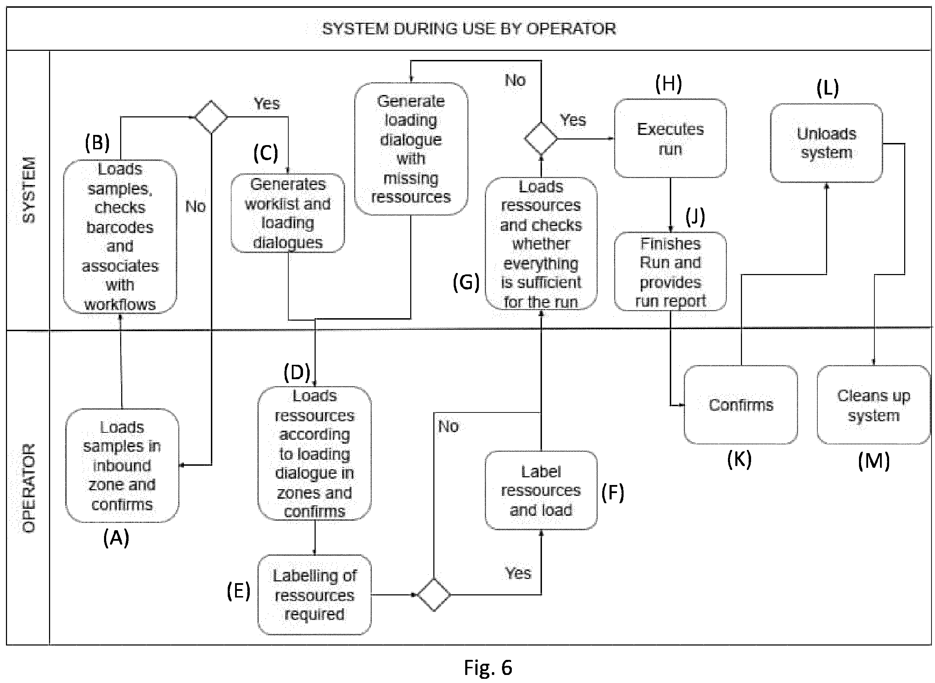

Fig. 6 shows a specific workflow indicating a preferred way of using the liquid handling system by an operator, i.e., user.

In a first step (A), the operator may load samples to be processed (first materials) at positions in the inbound zone. The positions can be predefined positions or arbitrary positions at, e.g., a flat surface being defined as the inbound zone. After having confirmed this action, the liquid handling system receives information about samples to be processed. This may be done by operator input, by scanning barcodes disposed on the loaded samples, or by loading this information from a higher-levelled software. Furthermore, the system may associate one or more specific sample preparation methods with the one or more samples or groups of samples which are provided in the inbound zone (step (B)).

The system may further doublecheck correctness of the information and the samples provided in the inbound zone, e.g., by scanning the samples and comparing the scanned information with the information retrieved from the higher-levelled software.

If the correct samples are loaded in the inbound zone (and the correct sample preparation methods have been associated, respectively), the system may, in step (C), generate a worklist comprising respective labware, i.e. second materials, needed for performing the respective sample preparations. Depending on this worklist, the operator may provide the respective materials in the desired material zones (step (D)) and label the materials if required (steps (E), (F)).

With the second materials provided to the liquid handling apparatus, the system may recognize the materials (e.g. by scanning, manual input, or information from a higher-ranked software) and check whether all required materials are at their desired position. In other words, the system may determine whether the preparation for the sample preparation method has been successful (step (G)). If this is not the case, the worklist will be updated, and a dialogue may be generated to indicate missing resources (N), e.g. at a display at the apparatus' workstation. The operator may thus recognize at this stage which resources are missing and can load the apparatus with the missing resources (e.g., by repeating steps D-F). After the system determines that preparation for the sample preparation method is achieved, the system, in step (H), will execute the specific one or more sample preparation methods, i.e. the run, as described with reference to Fig. 4 above.

When the run has been executed, the system may provide a report (step (J)) comprising specific information about the run. In some implementations, the operator may be required to confirm unloading of the apparatus (step (K) before or while the report may be uploaded, in step (L), to a higher-ranked software, e.g., LIMS system. Finally, in step (M), the prepared samples are removed from the liquid handling apparatus 100 for further processes and it may be necessary to clean up the apparatus.

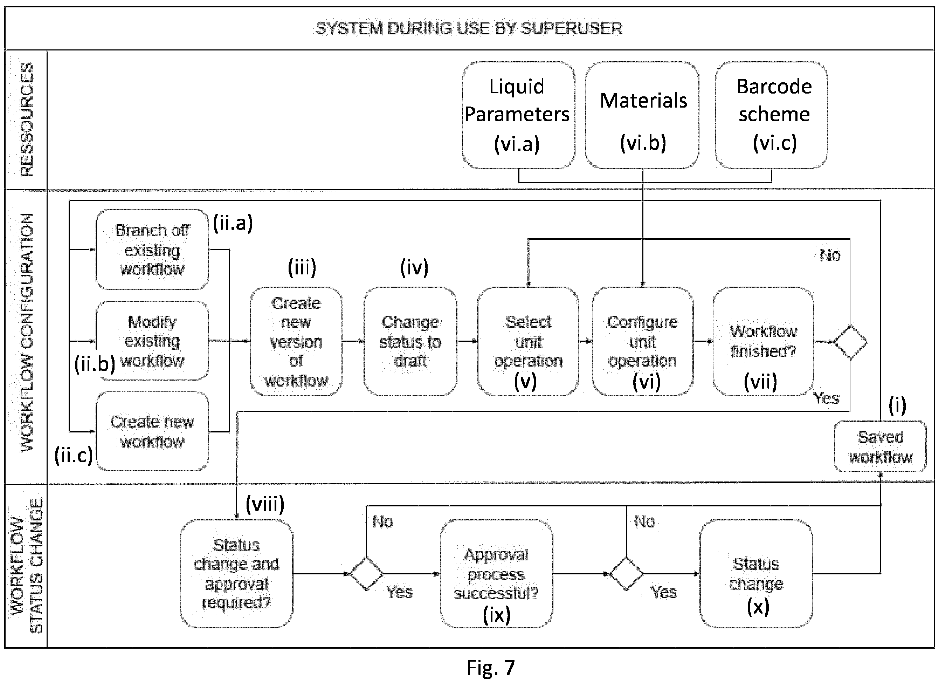

Fig. 7 shows an exemplary implementation of a process for configuring the system by a super user. As it will be apparent from the following, the present invention allows for configuration of a specific workflow (e.g., the unit method) within the system on a highly flexible manner.

Starting configuration, preferably based on an existing, previously saved workflow, e.g., a unit method being parametrized in accordance with a specific sample preparation method, (i), it may be possible to either branch the existing workflow (ii.a), modify the existing workflow (ii.b) or create a new workflow (ii.c). In any case, in a first step, a new version of the workflow is created (iii). The status may be changed to "draft" (iv). The core of the configuration is set out by selecting a unit operation (v), configuring the unit operation (vi) and check - in a repeated manner - whether the workflow is finished (vii). As long as the workflow is not finished, the previous steps (v) to (vii) are looped until the workflow has been entirely configured, e.g., until the unit method has been parametrized in accordance with a specific method for which the workflow is configured. Having configured the workflow, it can be determined that the workflow is finished. While looping the steps (v) to (vii), the step of configuring the unit operation (step vi) may comprise - in one or more loops - adding information about materials (vi.a), liquid parameters (vi.b) and/or barcode schemes (vi.c) (e.g., barcode schemes of labware, inbound or outbound materials).

In a last step, the finished workflow may be saved (i). Before saving the workflow, the process may include a check on a possibly required status change and approval of the workflow (viii), a checkup whether the approval process was successful (ix) and/or again the change of the status (x), e.g. form "draft" back to "operation". In this manner, a workflow can be configured, e.g., the unit method can be parametrized in accordance with one or more sample preparation methods by a super user in a robust, flexible, and/or user-friendly manner and for using such a workflow in a GMP application, validation of each such configured workflow is sufficient under GAMP 5 category 4.

As described, the liquid handling system according to the present invention allows high flexibility. In particular, the flexibility of the system may further be increased by following a zone concept. Such zone concept may be provided due to the flexible software architecture of the present system.

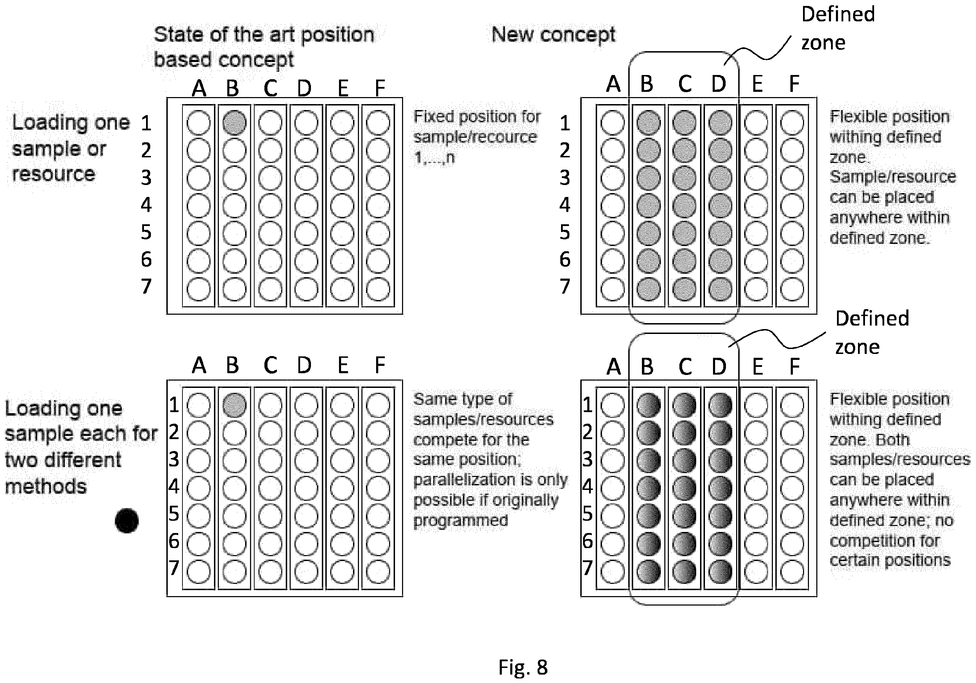

Fig. 8, on the right side, shows such a zone concept in comparison with a known position concept, which is represented in Fig. 8 on the left.

In the upper part of Fig. 8, this comparison is made for a material to be processed (e.g., a sample or a labware article) to be used in one specific sample preparation method only. In known apparatuses, the material to be processed must be provided at a predetermined, fixed position. For instance, in the upper left schematic representation of Fig. 8, the material to be processed is positioned at position B1. With known apparatuses, this specific material will always need to be positioned at position B1 when the specific sample preparation method is chosen.

In contrast, the zone concept of the present invention allows placing the material(s) needed for the specific method anywhere in a defined zone. In the upper right schematic representation of Fig. 8, the zone is extends from position B1 to position D7. Placing the material on any of the positions B1 to D7 allows the system to recognize the material and its location.

It is the standardized controller software according to the present invention (the software comprising instructions for performing a plurality of basic functionalities and being configured to perform a plurality of loops) in combination with the database unit comprising the database that allows for the beneficial zone concept. In systems of the state of the art, it was necessary to predefine any possible position of a specific type of material in order to configure and validate the system's software accordingly, i.e., dependent on these predefines specific positions. With the system architecture of the present invention, the controller software does not change, irrespective of positions of the materials. These positions are identified and supplied to the database. It is thus possible - while running the apparatus of the present invention - to first recognize the location and/or type of a material, e.g. by scanning a zone in which this material is expected (e.g., the zone comprising the positions B1 to D7 in the present example) by the scanner. Second, based on this information about the location and/or the type of the material, the method parameters to be retrieved from the database may be adapted. By populating the controller software (i.e., the instruction sets for performing the basic functionalities) accordingly, the location of each material (e.g., within the zone B1 to D7) is taken into account when running the method.

This highly variable concept also allows for parallelization of two different sample preparation methods in one run. An example for parallelization is given with reference to the bottom two schematic drawings of Fig 8. Using an apparatus of the state of the art - as depicted on the bottom left schematic drawing - allows only for parallelization if originally foreseen, i.e. if such parallelization has been programmed into the system beforehand. In the example depicted in Fig. 8, bottom left drawing, parallelization has not been foreseen. Therefore, for performing two methods (e.g., for preparing two samples) that need the same resources at the same positions, the method will have to be performed twice in a row. It is not possible to spontaneously provide one of the desired resources at a different position. There is no possibility to change the known system's workflow without significant effort.

With the zone concept of the present invention - as depicted on the bottom right drawing - parallelization is not associated with high effort. As it has been described for one material with reference to the upper right drawing in Fig. 8, it is also possible to place two or more materials in a defined zone, e.g. the zone B1 to D7. The system may recognize the positions where specific materials are placed, e.g. by a scanner, from a higher-ranked system, or through manual input. The system may then retrieve respective method parameters from the database to perform two methods in parallel. This is possible for positions in the inbound zone as well as in the outbound zone. It is thus possible to have the materials in the outbound zone, e.g., one or more prepared samples, clearly associated with the used materials of the inbound zone, although parallelization using the zone concept has been used. With this concept, flexibility can significantly be increased, output can be maximized, costs can be reduced and/or system errors due to wrong positioning may be reduced.

While the invention has been described in preferred embodiments with respect to the Figures, the scope of the invention is set-out in the appended set of claims and covers any equivalents thereof.

## Claims

1. A laboratory system for preparing a plurality of samples in accordance with one or more sample preparation methods, the system comprising:
a database unit with a database, the database storing information for defining a plurality of method parameters, the database unit being configured to define the method parameters in accordance with a selected sample preparation method, and
a laboratory apparatus comprising at least one materials zone, a data communication interface, and a control unit, wherein
the materials zone is configured for receiving a plurality of materials to be processed in the laboratory apparatus,
the control unit has a memory, the memory storing a controller software, the controller software being configured for having the apparatus perform a plurality of basic functionalities, wherein the controller software comprises an instruction set for each basic functionality, each instruction set comprising a set of configurable variables, wherein the controller software is configured to execute, within a selected sample preparation method, a plurality of loops with the instruction sets being executed within each of the plurality of loops, preferably in a predefined order;
the data communication interface is configured for communicating with the database unit; and wherein
the control unit is configured to:
retrieve, from the database unit and through the data communication interface, a respective method parameter for each configurable variable of each instruction set;
execute the plurality of loops with the sets of configurable variables defined in accordance with the retrieved method parameters.

2. The laboratory system according to claim 1, wherein, when executing the plurality of loops, the configurable variables correspond to the retrieved method parameters.

3. The laboratory system according to claim 1 or 2, wherein, when executing the plurality of loops, each loop comprises executing the instruction sets for the same basic functionalities.

4. The laboratory system according to claim 1, 2, or 3, wherein executing the plurality of loops comprises executing the instruction sets for the same basic functionalities in the same predefined order in each of the plurality of loops.

5. The laboratory system according to any one of claims 1 to 4, wherein the method further comprises:
based on the retrieved method parameters, determining whether one or more basic functionalities are not to be executed during one or more respective loops;
not executing the respective one or more basic functionalities during the one or more respective loops.

6. The laboratory system according to any one of claims 1 to 5, wherein the apparatus further comprises a scanner, wherein each of the plurality of materials to be processed is associated with a respective identifier, each identifier being configured to be read by the scanner, wherein the apparatus is configured to:
reading the identifiers with the scanner,
sending, to the database unit:
identity information derived from the identifiers, the identity information being configured to identify the associated materials to be processed; and/or
location information for identifying a respective location of the associated materials to be processed within the materials zone.

7. The laboratory system according to claim 6, wherein the scanner is an optical scanner, and/or wherein the identifiers are an optical code, preferably a barcode, more preferably a 1D barcode or a 2D barcode, such as a QR code.

8. The laboratory system according to claim 6 or 7, wherein the scanner is configured to scan the identifiers of the materials provided in the materials zone, and/or wherein the retrieved method parameters are defined by the database unit based on the identity information and/or the position information.

9. The laboratory system according to any one of claims 6 to 8, wherein the system, preferably the control unit, is configured to:
retrieve, from the database unit, an indication of required materials to be processed, the required materials to be processed being determined in accordance with the selected sample preparation method, and
indicate the materials to be processed to a user.

10. The laboratory system according to claim 9, wherein the system is configured to determine, based on the indication of the required materials to be processed and the identity information, whether all required materials to be processed are provided in the materials zone, preferably, wherein the system is configured to indicate, to the user, if a required material to be processed is missing.

11. The laboratory system according to any of the preceding claims, wherein the materials to be processed comprise one or more of: one or more samples to be processed, one or more solvents, and/or one or more labware articles.

12. The laboratory system according to any of the preceding claims,
wherein one or more of the identifiers are attached directly to the materials to be processed; and/or
wherein one or more of the identifiers are attached to an array or mount carrying a plurality of materials to be processed.

13. The laboratory system according to any of the preceding claims, wherein the materials zone comprises one or more of the following: an inbound zone adapted for receiving samples to be prepared, a resource zone adapted for receiving different resources required for sample preparation, an outbound zone adapted for receiving prepared samples.

14. The laboratory system according to any of the preceding claims, wherein the laboratory apparatus is a liquid handling apparatus, preferably wherein the liquid handling apparatus is an automated air displacement liquid handling apparatus.

15. The laboratory system according to any of the preceding claims, wherein the database, preferably the database unit, is external to and/or remote from the laboratory apparatus.
